## Europäisches Patentamt
## European Patent Office
## Office européen des brevets

(11) Publication number: **0 246 198**
**B1**

(12) **EUROPEAN PATENT SPECIFICATION**

(45) Date of publication of patent specification: **09.01.91**

(51) Int. Cl.⁵: **B 60 J 7/11, E 05 D 1/06**

(21) Application number: **87830056.5**

(22) Date of filing: **13.02.87**

(54) Removable sunroof for motor vehicles.

(30) Priority: **14.02.86 IT 5297886 u**

(43) Date of publication of application:
**19.11.87 Bulletin 87/47**

(45) Publication of the grant of the patent:
**09.01.91 Bulletin 91/02**

(84) Designated Contracting States:
**DE ES FR GB SE**

(56) References cited:
**EP-A-0 086 668**
**EP-A-0 094 437**
**DE-A-3 135 126**
**FR-A-2 234 152**

(73) Proprietor: **FIAT AUTO S.p.A.**
**Corso Giovanni Agnelli 200**
**I-10135 Torino (IT)**

(72) Inventor: **Cerrato, Edilio**
**Via Buenos Aires 116**
**I-10100 Torino (IT)**

Courier Press, Leamington Spa, England.

## Description

The scope of the present finding is a sliding roof made up of thermoplastic material, strengthened by fiber glass buried into the plastics, obtained through a compression moulding process from thermoforming plate.

Presently, the state of the art provides from DE—A—3135126 a sliding and extractable roof for motor vehicles, which has a front hooking system, made up of a hook secured to a panel rib and suited to insert into a bracket, which can be a source of vibrations and noise. Furthermore, the positioning system of that sliding roof is not consistent.

In order to avoid the above disadvantages the present finding provides a sliding and extractable roof for motor vehicles, whose hooking and motion system is composed of:

a front hooking system, made up of a hook secured to a panel rib and suited to insert into a bracket fitted with an elastomeric bush and secured to the car roof panel;

a hooking and positioning system in open or closed position of the sliding roof, made up of a handle secured at one end of the panel in a swivelling way on a bolt, such a handle being suited, in open position, by the end not secured to the panel, so as to keep the sliding roof open for a width which is in direct proportion with the handle length (sliding and extractable roof of the type disclosed in DE—A—3 135 126) characterised in that:

a. the roof is accomplished by a thermoplastic panel (1) strengthed with buried fiber glass, obtained by a compression moulding process starting from a thermoforming plate;

b. the front hooking system has a hook (3) coated with a vibration-damping material (4);

c. the handle (14) is held in closed position against the panel (1) by an elastic element (17), and the handle (14) is suited, in open position, to engage itself, by the end not secured to the car roof panel, with a bracket (20) secured to the car roof panel.

Further features and advantages will become clearer from the following description, supplied as a non-restrictive example and relating to the attached figures, of which:

Fig. 1 is a section view of the sliding roof front hooking system according to the finding;

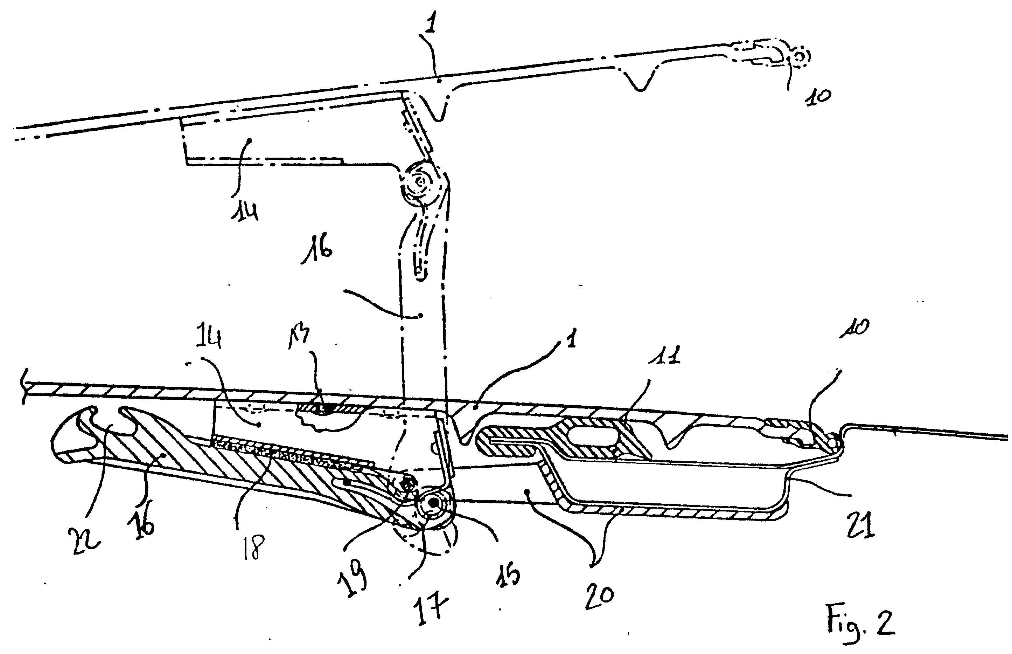

Fig. 2 is a section view of the sliding roof rear hooking system according to the finding, with the open position shown in dotted line;

Fig. 3 is a plan view of a part in Fig. 2.

With reference to the figures, 1 indicates a properly ribbed thermoplastic material which makes up a sliding roof for motor vehicle.

On the front rib 2 of the panel, at least two hooks 3 of plastics or metal are secured through a bolt 3a inserted across the rib.

The hooks 3 are coated with a vibration-damping elastomer material 4 and insert into the openings 5, fitted with plastics bushes 6, metal brackets 7 secured in the housing provided for on the external metal sheet 8 of the sliding roof 9, through welding or other proper means.

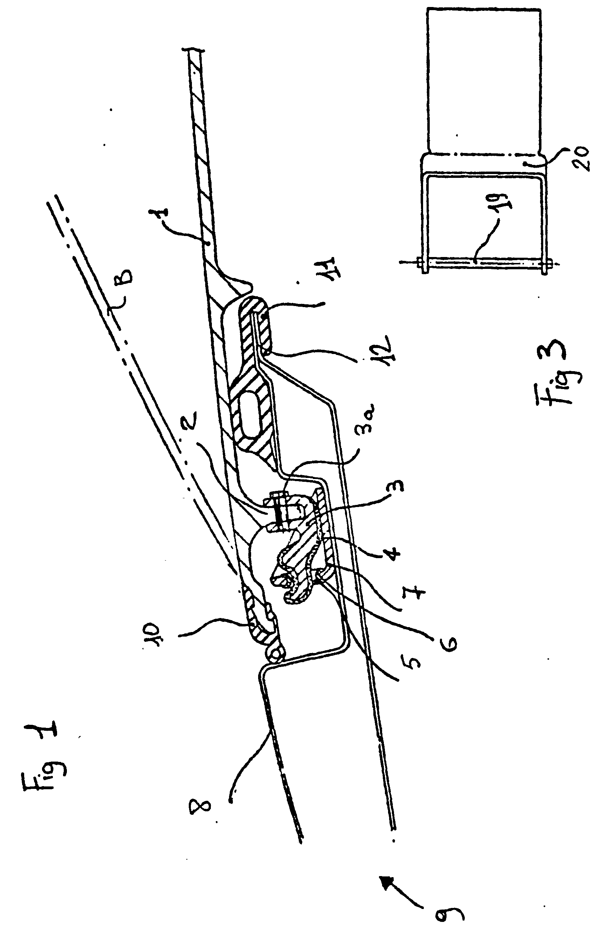

The insertion of the hooks into the openings 5 permits to hold the front end of the panel 1, and, when necessary, enable the same to swivel in order to orient itself along the dotted lines B in Fig. 1.

Two seals 10 and 11, one of them being secured on the front contour of the sliding roof, and the other on the internal edge 12 of the opening made in the roof panel 9, guarantee sliding roof tight-proof.

At the rear end of the panel there is secured through press-forged pins 13, a bracket 14 fitted with a bolt 15 on which is hinged the end of a handle 16 from plastic material, which is held in closed position, pressed against the bracket 14 by a spring 17 secured to the bracket itself. The matching between the handle and bracket is insured by an adhesive strip VELCRO 18 in addition to the spring action.

The handle 16 in closed position is anchored to the pin 19 of a bracket 20 secured to the lower wall 21 of the roof panel, so that the sliding roof is held in closed position.

When, instead, the sliding roof is to be opened, it will be enough to detach the handle from the VELCRO and, overcoming the spring force, take the handle 16 to such a position as to insert the pin 19 into the recess 22, which is at the end of the handle itself not engaged on the bolt 15.

The shape of the recess 22 is so designed as to cause the handle to be held on the bolt by the spring action 17.

## Claim

Sliding and extractable roof for motor vehicles, whose hooking and motion system is composed of:

a front hooking system, made up of a hook (3) secured to a panel rib (2) and suited to insert into a bracket (7) fitted with an elastomeric bush (6) and secured to the car roof panel (1);

a hooking and positioning system in open or closed position of the sliding roof, made up of a handle (16) secured at one end of the panel (1) in a swivelling way on a bolt (5), such a handle (16) being suited, in open position, by the end not secured to the panel (1), so as to keep the sliding roof open for a width which is in direct proportion with the handle length (16), characterised in that:

a. the roof is accomplished by a thermoplastic panel (1) strengthened with buried fiber glass, obtained by a compression moulding process starting from a thermoforming plate;

b. the front hooking system has a hook (3) coated with a vibration-damping material (4);

c. the handle (16) is held in closed position against the panel (1) by an elastic element (17), and the handle (16) is suited, in open position, to engage itself, by the end not secured to the car roof panel, with a bracket (20) secured to the car roof panel.

**Patentanspruch**

Ausziehbares Schiebedach für Kraftfahrzeuge mit einem Einrast- und Bewegungssystem, bestehend aus

einem vorderen Rastsystem mit einem Haken (3), der an einer Plattenrippe (2) befestigt und in eine Stütze (7) einsetzbar ist, in die eine Elastomerbuchse (6) eingepaßt und die am Fahrzeugdach (8) befestigt ist,

einem hinteren Einrast- und Positioniersystem für die geöffnete oder geschlossene Stellung des Schiebedaches mit einem Griff (16), der an einem Ende der Platte (1) mittels eines Bolzens (5) schwenkbar angebracht ist und der in der geöffneten Stellung mit seinem nicht an der Platte (1) befestigten Ende das Schiebedach in einer Öffnungsweite hält, die direkt proportional zur Länge des Griffs (16) ist, dadurch gekennzeichnet, daß

a. das Dach aus einer thermoplastischen, glasfaserverstärkten Platte (1) besteht, die aus einer warmverformbaren Platte durch Formpressen hergestellt ist,

b. das vordere Rastsystem einem mit schwingungsdämpfendem Werkstoff (4) beschichteten Haken (3) hat,

c. der Griff (16) in der geschlossenen Stellung über ein elastisches Element (17) gegen die Platte (1) gehalten wird und in der offenen Stellung mit seinem nicht an der Dachplatte befestigten Ende in Eingriff mit einer am Fahrzeugdach befestigten Stütze (20) gebracht werden kann.

**Revendication**

Toit coulissant et amovible pour véhicules automobiles dont le système d'accrochage et de déplacement est composé de:

un système d'accrochage avant, composé d'un crochet (3) fixé à une nervure (2) du panneau et approprié pour s'insérer dans une ferrure (7) munie d'une bague en élastomère (6) et fixée au panneau (1) du pavillon du véhicule;

un système d'accrochage et de positionnement en position ouverte ou en position fermée du toit coulissant, composé d'une poignée (16) fixée à une extrémité du panneau (1) par une liaison articulée sur un axe (5), cette poignée (16) étant appropriée, dans sa position ouverte, au niveau de l'extrémité non fixée au panneau (1), pour maintenir le toit coulissant ouvert sur une largeur qui est directement proportionnelle à la longueur de la poignée (16) caractérisé en ce que

a. le toit est fait d'un panneau (1) en matière plastique renforcée de fibres de verre noyées, obtenu par un procédé de moulage par compression en partant d'une plaque thermoformée;

b. le système d'accrochage avant comprend un crochet (3) revêtu d'une matière amortisseuse des vibrations (4);

c. la poignée (16) est maintenue en position fermée contre le panneau (1) par un élément élastique (17) et la poignée (16) est appropriée, dans la position ouvertre, pour s'engager, par l'extrémité qui n'est pas fixée au panneau du pavillon du véhicule, dans une ferrure (20) fixée au panneau du pavillon du véhicule.

Fig 1

10

8

B

2

1

9

5  6  7  4  3  3a  12  11

EP 0 246 198 B1

19

20

Fig 3

Fig. 2

EP 0 246 198 B1